# EUROPEAN PATENT SPECIFICATION

(11) **EP 0 334 963 B1**
(45) Date of publication and mention of the grant of the patent: **25.08.1993**
(21) Application number: 88907813.5
(22) Date of filing: 03.09.1988
(51) Int. Cl.: G05B 19/403, B23K 26/08

(54) **METHOD OF CONTROLLING LASER POWER**
REGELVERFAHREN DER LASERENERGIE
PROCEDE DE COMMANDE D'UNE ENERGIE LASER

(30) Priority: 10.09.1987 JP 226791/87
(43) Date of publication of application: 04.10.1989
(73) Proprietor: FANUC LTD., Minamitsuru-gun, Yamanashi 401-05 (JP)
(72) Inventor: YAMAZAKI, Etsuo, Hachioji-shi Tokyo 192-01 (JP); IEHISA, Nobuaki Fanuc Mansion Harimomi 7-304, Yamanashi 401-05 (JP); SUZUKI, Kazuhiro Fanuc Dai-3 bira-Karamatsu, Yamanashi 401-05 (JP)
(74) Representative: Brunner, Michael John
(86) International application number: PCT/JP88/00891
(87) International publication number: WO 89/02335

(56) References cited:
- JP-A-60 127 084
- PATENT ABSTRACTS OF JAPAN vol. 9, no. 77 (M-369)(1800) 06 April 1985, & JP-A-59 206192 (MITSUBISHI DENKI K.K.) 22 November 1984,

## Description

The present invention relates to a laser power controlling method, and more particularly to a laser power controlling method for improving a synchronism between a moving speed of a machine system and a laser output control.

Laser machining apparatuses have been extensively used in conjunction with a numerical control apparatus, since a complex shape machining of a workpiece can be performed at a high speed. Generally, no problems exist in machining a workpiece along a straight line or a curve of a large radius of curvature. However, if the output of a laser beam is not controlled in accordance with the moving speed of the workpiece when machining a corner portion or an acutely angled edge portion thereof, a welding loss occurs due to stay of thermal energy and excessive heat absorption, resulting in a decreased machining accuracy and causing to degrade the material of the workpiece.

In order to solve such drawback, a laser output controlling method has been proposed in Japanese patent application No. 62-107824 in which it is proposed to control the laser output in accordance with a machining speed when machining the edge portions.

Conventionally, as in the above-mentioned application, the laser output is controlled in response to an instruction regarding the moving speed calculated from a machining program.

However, with such a laser output controlling method, there is a significant time delay between the occurrence of the instruction and the movement of a mechanical system to be controlled by the instruction due to a large inertia of the mechanical system. On the other hand, substantially no time delay is involved in outputting the laser beam, since the laser output is controlled by a current flowing in a discharge tube.

Specifically, the response time of the laser output is smaller by approximately two figures than that of the mechanical system. The control of the laser output with the moving instruction of the mechanical system causes to loose the synchronism between a moving speed of a table and a laser output value. For this reason, there are cases where the machining accuracy and the machining performance are not sufficiently attained.

An object of the present invention is to resolve the above-mentioned problems and to provide a laser power controlling method in which a synchronism between a moving speed of a machine system and a laser output control is improved.

JP-A-59206192 discloses a method for controlling the power of a laser beam for machining a workpiece, a mechanical system being provided for causing a relative movement at a controlled speed between the workpiece and the laser beam, the speed and the power of the laser beam being controlled by a numerical control system supplying a speed instruction signal and a laser output instruction signal, wherein the laser output instruction signal is delayed relative to the speed instruction signal for assuring synchronism therebetween.

The present invention is characterised over JP-A-59206192 by:
feeding the speed instruction signal to a simulator approximating the mechanical system by a first-order or a second order function, and altering said laser output instruction signal in response to the results from the simulator thereby achieving said synchronism.

By inputting the moving speed instruction to the simulator which has a basic characteristic of the mechanical system, the movement of a workpiece mounted on a table is synchronised with the laser power irradiated onto the workpiece, thereby improving a cutting performance.

In the drawings:-
Fig. 1 is a block diagram showing an arrangement of an apparatus used in carrying out a method according to one embodiment of the present invention;
Fig. 2 is a flowchart illustrating a software for processing the method according to the embodiment of the invention; and
Fig. 3 is a block diagram illustrating a first-order simulation processing.

One embodiment of the present invention will be described with reference to the drawings.

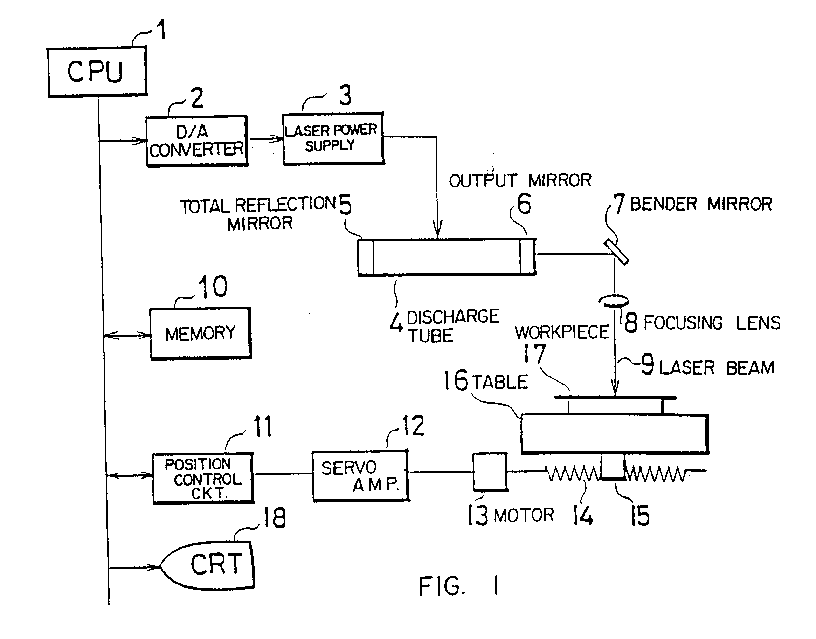

Fig. 1 is a block diagram showing an arrangement of an apparatus used in carrying out a method according to one embodiment of the present invention. In the figure, a central processing unit 1 serves to control the operation of the entire apparatus. A D/A converter 2 is connected to the central processing unit 1 for receiving a digital instruction outputted therefrom and converts it to an analog instruction. A laser power supply 3 is connected to the D/A converter 2, which outputs a high frequency voltage corresponding to the analog instruction fed from the D/A converter 2 upon rectifying a commercial power supply voltage. A discharge tube 4 is provided, in the interior of which a laser gas is circulated and is excited by the application of the high frequency voltage supplied from the laser power supply 3. A total reflection mirror 5 for reflecting the laser light and an output mirror 6 are disposed in confrontation, in which the laser light reciprocating therebetween receives energy from the excited laser gas and is amplified, and a part of the laser light is delivered to the outside from the output mirror 6. The advancing direction of the laser light 9 delivered is changed by a bender mirror 7 and is irradiated onto a workpiece 17 through a focusing lens 8.

A memory 10 stores a machining program and various kinds of parameters, and a nonvolatile bubble memory is employed therefor. The output of a position control circuit 11 is amplified by a servo amplifier 12 and applied to a servo motor 13 to control the rotations thereof, and the movement of a table 16 is in turn controlled by a ball screw 14 and a nut 15 to thus control the position of the workpiece 17. Although a single position control circuit 11 is shown for illustrating the positional control in one axial direction, two position control circuits are required in actuality for the positional control of the workpiece in two axial directions. Denoted by reference numeral 18 is a display device, for which a CRT or a liquid crystal display unit is employed.

The central processing unit 1 reads the machining program stored in the memory 10, decodes the instructions, and outputs an amount of shift of each of the axes to the position control circuit 11. The central processing unit 1 further calculates a moving speed based upon the amount of shift per a unitary period of time, calculates a laser output instruction value from an equation presented below by using the results obtained by first-order or second-order filtering the moving speed data. The laser output instruction value is outputted to the D/A converter 2.

$\text{W = K × Y₁ + W₀}$

where W represents the laser output instruction value; Y₁, a feeding speed as sumilated; K, a constant; and W₀, a constant equivalent to the laser output when the feeding speed is zero.

The laser power supply 3 is supplied with an analog voltage from the D/A converter 2 and applies a voltage to the discharge tube 4 to control a current flowing therein.

The discharge tube 4 is provided with the total reflection mirror 5 and the output mirror 6 at both ends thereof to constitute a Fabry-Perot oscillator, in which the laser beam produced by the discharge is amplified and delivered to the outside. The advancing direction of the laser beam 9 outputted from the laser oscillator is changed by the bender mirror 7, focused to a small spot beam by the focusing lens 8 and is then irradiated onto the workpiece 17.

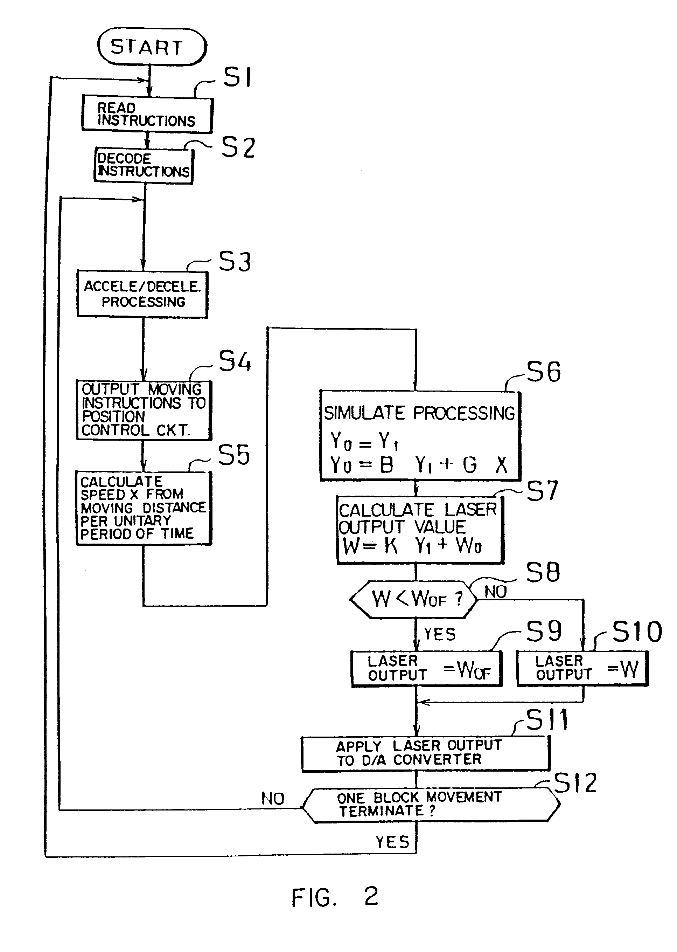

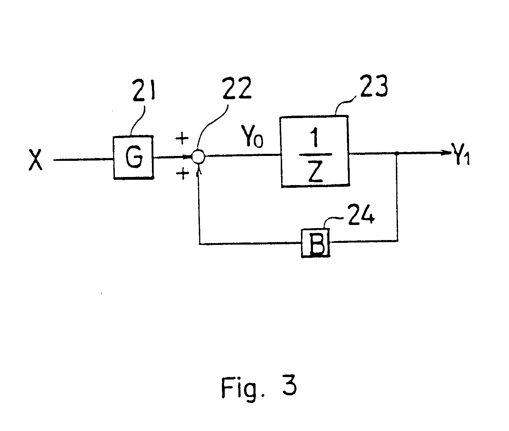

Next, description will be made with respect to a software processing for carrying out the method according to this embodiment. Fig. 2 is a flowchart illustrating such a software, in which numerals following a character "S" represent step numbers.
[S1], [S2]: The central processing unit 1 reads a machining program and decodes instructions.
[S3]: An acceleration/deceleration processing is executed, in which for the acceleration/deceleration, an acceleration/deceleration instruction is used as a moving instruction. When the acceleration/deceleration is not needed, an ordinary instruction is used as the moving instruction.
[S4]: The respective moving instructions are outputted to the position control circuit 11.
[S5]: A speed X is calculated from the moving instruction value per a unitary period of time.
[S6]: Simulate processing is executed for the speed X. The simulator approximated to the mechanical system is same in procedure as a digital filter. Exemplified herein is a first-order delay procedure. Shown in Fig. 3 is a block diagram illustrating the simulate processing, in which reference numeral 21 denotes a constant; 22, an operation unit; 23, an integration element; and 24, a feedback constant. As indicated, an output Y₁ can be obtained by the following equations.

   $\text{Y₁ = Y₀ (1)}$

   $\text{Y₀ = B × Y₁ + G × X (2)}$

   where B and G are constants dependent on a mechanical characteristic. Substituting data regarding the moving speed instruction as operated from the moving instruction for an input X of the above filter and executing the program according to the above equations (1) and (2), Y₁ can be obtained.
[S7] By the use of Y₁, a laser output instruction value is operated by the followed equation to give a laser output instruction in which the delay of the mechanical system is taken into consideration.

   $\text{W = K × Y₁ + W₀}$

   where W is a laser output instruction value; Y₁, a feed speed instruction in which the mechanical characteristic is taken into consideration; K, a constant; and W₀, a constant which is equivalent to a laser output when the speed is zero.
[S8]: The laser output W is calculated is compared with a minimum machining output W_{OF}. When W is smaller than W_{OF}, W_{OF} is outputted [S9], whereas W is larger than W_{OF}, W is used as the laser output [S10]. It is for this reason that the calculated output W does not fall below the minimum machining output W_{OF}.
[S11]: The laser output W is converted to an analog output by the D/A converter 2, and the analog output is applied to the laser power supply 3 to thereby control the laser output.
[S12]: It is checked whether or not execution for one block moving instruction has been completed. If YES, the program returns to S1 in which to read a new block, whereas if NO, the program proceeds to S3 where the moving processing is continued.

As described, by simulating the delay of the mechanical system, it is possible to obtain the laser output in correspondence to the speed of the mechanical system. As a result, the speed of the machine and the laser output are accurately in coincidence with each other and the laser machining accuracy is enhanced.

Although in the above-description the simulator for simulating the mechanical system is of the first-order, it is possible to process the simulator with the second-order procedure.

As described above, according to the present invention, a machine moving instruction is inputted to a simulator having a basic characteristic of the mechanical system, so that the movement of the workpiece mounted on a table of the machine is synchronized with the power of the laser beam irradiated onto the workpiece. Therefore, the machining speed can be in exact coincidence with the laser output and the machining accuracy and the machining performance can be improved.

## Claims

1. Method for controlling the power of a laser beam for machining a workpiece, a mechanical system being provided for causing a relative movement at a controlled speed between the workpiece and the laser beam, the speed and the power of the laser beam being controlled by a numerical control system supplying a speed instruction signal and a laser output instruction signal, wherein the laser output instruction signal is delayed relative to the speed instruction signal for assuring synchronism therebetween, characterized by:
feeding the speed instruction signal to a simulator approximating the mechanical system by a first-order or a second order function, and altering said laser output instruction signal in response to the results from the simulator thereby achieving said synchronism.

2. Method for controlling the power of a laser beam according to claim 1, wherein said simulator uses a digital simulator technique.

## Patentansprüche

1. Verfahren zur Leistungsregelung eines Laserstrahls zum Bearbeiten eines Werkstückes, wobei ein mechanisches System zum Herbeiführen einer relativen Bewegung mit einer geregelten Geschwindigkeit zwischen dem Werkstück und dem Laserstrahl vorgesehen ist, die Geschwindigkeit und die Laserstrahlleistung von einem numerischen Regelsystem geregelt wird, das ein Befehlssignal für die Geschwindigkeit und ein Befehlssignal für die Laserausgangsleistung liefert, wobei das Befehlssignal für die Laserausgangsleistung gegenüber dem Befehlssignal für die Geschwindigkeit zum Zwecke einer gegenseitigen Synchronisierung verzögert wird, dadurch gekennzeichnet, daß das Befehlssignal für die Geschwindigkeit einem Simulator zugeführt wird, der dem mechanischen System mit einer Funktion erster Ordnung oder zweiter Ordnung angenähert ist und daß das Befehlssignal für die Laserausgangsleistung abhängig von den Resultaten aus dem Simulator zum Herbeiführen der Synchronisierung geändert wird.

2. Verfahren zur Leistungsregelung eines Laserstrahls nach Anspruch 1, wobei der Simulator eine digitale Simulatortechnik benutzt.

## Revendications

1. Méthode de régulation de la puissance d'un faisceau de laser pour usiner une pièce d'usinage, un système mécanique étant prévu pour assurer le déplacement relatif à vitesse contrôlée entre la pièce d'usinage et le faisceau de laser, la vitesse et la puissance du faisceau de laser étant sous la régulation d'un système de contrôle numérique apportant un signal de consigne de vitesse et un signal de consigne de puissance de bit du laser, ledit signal de consigne de débit du laser étant retardé par rapport au signal de consigne de vitesse pour assurer la synchronisation entre les deux, **caractérisée par:**
l'amenée du signal de consigne de vitesse a un simulateur prévoyant l'approximation du système mécanique par une fonction de premier ordre et une fonction de deuxième ordre, ainsi que la modification du signal de consigne de débit de laser en réponse aux résultats du simulateur, assurant ainsi ladite synchronisation.

2. Méthode de régulation de la puissance d'un faisceau de laser suivant la revendication 1, selon laquelle le simulateur exploite la technique de simulation alphanumérique.
